(19) Europäisches Patentamt / European Patent Office / Office européen des brevets

(11) **EP 2 023 502 B1**

(12) **EUROPEAN PATENT SPECIFICATION**

(45) Date of publication and mention
of the grant of the patent:
**11.12.2013 Bulletin 2013/50**

(21) Application number: **07290997.1**

(22) Date of filing: **10.08.2007**

(51) Int Cl.:
**H04B 7/02** *(2006.01)*          **H04B 7/06** *(2006.01)*

(54) **A method of providing a broadcast of multicast service in a digital wireless communication network**

Verfahren zur Bereitstellung eines Rundfunk- oder Multicast-Dienstes in einem digitalen drahtlosen Kommunikationsnetzwerk

Procédé pour la fourniture d'un service de multidiffusion dans un réseau de télécommunication numérique sans fil

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**11.02.2009 Bulletin 2009/07**

(73) Proprietor: **Alcatel Lucent**
**75007 Paris (FR)**

(72) Inventors:
• **Bourdeaut, Stanislas**
**75015 Paris (FR)**

• **Bachl, Rainer**
**90425 Nürnberg (DE)**

(74) Representative: **Therias, Philippe**
**Alcatel-Lucent International**
**32, avenue Kléber**
**92700 Colombes (FR)**

(56) References cited:
EP-A1- 1 564 908          EP-A2- 0 891 048
WO-A-2005/062496          WO-A-2007/109630
US-A1- 2007 155 336

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The invention relates to a method of providing a broadcast or multicast service to user equipments in a digital wireless telecommunication network, a base station, a method of receiving a broadcast or multicast service in a digital wireless communication network, a user equipment, a coordination entity and a computer program product.

### Background and related art

Currently, UMTS (universal mobile telecommunications systems) networks are worldwide being upgraded in order to provide data to user equipments (UEs) at high data rates. In order to ensure the competitiveness of UMTS for the next couple of years and beyond, concepts for UMTS long-term evolution (LTE) have been investigated. Objective is a high data rate, low latency and packet optimized radio access technology.

A UMTS network constitutes the third generation (3G) of cellular wireless networks. Thereby, multimedia broadcast/multicast service (MBMS) is one of the evolving service concepts within the third generation networks. MBMS is a user service, which is a combination of both a broadcast service and a multicast service. Third generation partnership (3GPP) is working on establishing standards for multimedia/multicast services.

MBMS service concepts include two transmission modes for providing MBMS data to user equipments, namely point-to-multipoint single cell (PTM-SC) transmission and point-to-multipoint multi-cell transmission (PTM-MC) in the form of an MBSFN (multicast broadcast single frequency network). In the 3GPP RAN WG2 specification, the MBMS protocol allows to send channel quality indications when point-to-multipoint transmission applies in a single cell. Point-to-multipoint transmission can be used when there are few users which are interested in MBMS in a cell.

Besides the usage of MBMS for point-to-multipoint transmissions, further concepts can be used in order enhance transmitted data rates while reducing interference in general. One possibility is the usage of multiple antennas at the transmitter and at the receiver. Such multiple antennas have the potential to either increase the data rate through spatial multiplexing or enhance the quality of transmission through exploitation of diversity or beamforming. Multi-user MIMO (multiple-input multiple-output) has gained a considerable amount of interest in the recent years due to its potential for high capacity. Thereby, MIMO systems can achieve significant diversity and array gain by using transmit beamforming and receive combining techniques.

Thereby, especially beamforming with antenna arrays has shown to be able to achieve substantial capacity enhancements. Beamforming provides a practical means of supporting multiple users with signals transmitted at identical time-frequency resources.

US 2007/0155336 A1 does disclose an apparatus and method for eliminating multi-user interference in a codebook based beamforming system. WO 2005/062496 A1 relates to beamforming in a multicarrier multi-user communication system applying an adaptive method for determining transmit weights for the various antenna beams.

### Summary of the invention

The above mentioned problems are solved by the independent claims.

The present invention provides a method of providing a broadcast or multicast service to user equipments in a digital wireless telecommunication network, the digital wireless telecommunication network comprising a set of antennas for providing the service to the user equipments, the method comprising sending by base stations broadcast or multicast service data to the user equipments. The method further comprises receiving by the base stations feedbacks from the user equipments in response to the sent data, the feedbacks comprising user equipments reception quality information and/or precoding vector information, wherein the precoding vector information indicates for each of the user equipments a precoding vector for reception of the broadcast or multicast service. The method further comprises providing the feedbacks by the base stations to a coordination entity and in response to the feedbacks provided to the coordination entity, receiving by the base stations optimized precoding vectors from the coordination entity for transmitting the service to the user equipments.

Adding measurement feedback from the user equipments to the radio access network, such as the preferred precoding or the reception quality allows the network to adapt to beamforming or MU-MIMO transmission. Thus, the method according to the invention has the advantage, that point-to-multipoint transmission beamforming and MIMO operation improves the spectral efficiency in the entire network. In particular, beamforming reduces interferences to other users not receiving the same MBMS service and MIMO exploits the available resources more than once. Multi-user (MU) MIMO spatially separates the transmissions to multiple users, while single user (SU) MIMO potentially achieves higher data rates with two parallel code words or data streams to users with very good channel conditions.

In accordance with an embodiment of the invention, the method further comprises sending a codebook to the user equipments, the codebook comprising a look-up table, the look-up table associating precoding vectors with indexes. This allows a usage of different kinds of feedbacks. For example the precoding vector information may indicate preferred precoding vectors of the user equipments for reception of the broadcast or multicast service data. Thereby, the precoding vector information may comprise for each of the user equipments one of the indexes. In an alternative, instead of providing the index of a preferred precoding vector, user equipments may provide acknowledgement signals (ACK) and/or negative acknowledgement signals (NAK) for a particular precoding vector which is currently used to provide the broadcast or multicast service data to the user equipments. In a further alternative, the user equipments may provide a list of estimated reception quality information each associated with a respective precoding vector comprised in the codebook. Also, it is possible that the user equipments only provide the service data reception quality information for the precoding vector which is currently used for transmitting the broadcast or multicast service data to the user equipments.

In general, the user equipment reception quality information may be a channel quality indicator (CQI) and/or an acknowledgement signal (ACK) and/or a negative acknowledgement signal (NAK) and/or a path attenuation measurement and/or a Doppler bandwidth and/or a number of reception antennas for each user equipment. CQI and the ratio of successful transmissions (number of received ACK divided by the number of received NAK) accounts for the channel quality of a particular user for a given precoding vector directly, while the index for the preferred precoding vector provides a preference of a user equipment for a particular transmission mode from the base station.

The method according to the invention can be performed for example by a base station or by a higher ranking control entity, like a multi-cell/multicast coordination entity (MCE) which is adapted to control and coordinate the usage of radio resources of multiple base stations.

The codebook used by the base station can be either a static and fixed codebook, or it can be a dynamically updated codebook that is adapted by the base station and conveyed to the UE through possibly the broadcast channel (BCH) or the multicast control channel (MCCH).

In accordance with an embodiment of the invention, the broadcast or multicast service can be for example a multimedia broadcast or multicast service (MBMS). The digital wireless telecommunication network can be an E-UTRA (evolved universal terrestrial radio access) or UMTS network.

In accordance with an embodiment of the invention, the physical uplink channel for carrying feedback information can be either the physical uplink control channel (PUCCH) or the physical uplink shared channel (PUSCH) can be used by multiplexing the feedback information together with data.

In accordance with an embodiment of the invention, the determination of the optimized precoding vector is performed periodically in time and/or in case one of the user equipments drops the service and/or in case a further user equipment is requesting the service and/or in case a change of the reception quality exceeds a predetermined threshold. Upon receipt of the signaling feedback, the access network may adapt the MBMS transmission (e.g. precoding vector, power setting, codebook selection) for the beamforming or MIMO transmission.

Using either a periodical determination of the optimized precoding vector or a determination of the optimized precoding vector in the other above mentioned cases has the advantage, that for example a base station is able to adjust transmission parameters optimally adapted to channel conditions, the number of user equipments, etc.

In accordance with an embodiment of the invention, the determination of the optimized precoding vector by analyzing the feedback comprises discarding the user equipments with the service data reception quality below a predetermined threshold and maximizing the service data reception quality for the user equipment with the lowest service data reception quality of the remaining user equipments, the maximization resulting in the optimized precoding vector. Therewith, for obtaining an optimized precoding vector to provide a broadcast or multicast service to the set of user equipments, either the data reception quality of the individual user equipments is considered, or an optimal data reception quality via the preferred precoding vector information provided from the user equipments to the base station is considered.

Optimizing the broadcast or multicast service provided to the set of user equipments based on direct feedbacks of the user equipments is thereby an important point in order to obtain a reliable optimization procedure: only the involved user equipments really know the service data reception conditions at the spatial positions where said user equipments currently are located. Only the knowledge of these actual individual service reception conditions enables for example a base station to accurately adjust transmission parameters like power settings, transmission ranks (like single stream with or without transmit diversity, SU-MIMO, MU-MIMO), precoding vectors, modulation and coding scheme (MCS), data rate and TTI.

In accordance with an embodiment of the invention, the determination of the optimized precoding vector by analyzing the feedback comprises determining from the codebook a set of precoding vectors, wherein the distances of the preferred precoding vectors from the individual precoding vectors comprised in the set of precoding vectors are below a predetermined value. The determination further comprises discarding the preferred precoding vector of the user equipment with the lowest service data reception quality of the user equipments and which is not comprised in the set of precoding vectors and discarding the user equipment for service data reception. These two steps are repeated until all remaining preferred precoding vectors are comprised in the set of precoding vectors. Thereupon, the optimized precoding vector is selected from the set of precoding vectors, wherein the optimized precoding vector is the precoding vector closest to the preferred precoding vector of the user equipment with the lowest service data reception quality of the user equipments.

Thereby, it is also possible that the distances of the preferred precoding vectors from the individual precoding vectors comprised in the set of precoding vectors are weighted with the reception quality of the user equipments. This facilitates determination of the set of precoding vectors from the codebook, since with the weighting of the distances with the reception quality the method is able to concentrate the selection of precoding vectors with respect to user equipments with low reception quality which strongly rely on an optimized selection of a precoding vector for receiving the broadcast or multicast service data from the base station.

The codebook can for example be a Fourier codebook, such that the distance criterion may be for example the angular difference between the main lobe directions of the beam pattern corresponding to the precoding vectors.

In another aspect, the invention relates to a base station, the base station being adapted for providing a broadcast or multicast service to user equipments in a digital wireless telecommunication network, the base station comprising a set of antennas for providing the service to the user equipments, the base station comprising means for sending broadcast or multicast service data to the user equipments, means for receiving feedbacks from the user equipments in response to the sent data, the feedbacks comprising user equipment reception quality information and/or a precoding vector information, wherein the precoding vector information indicates for each of the user equipments a precoding vector for reception of the broadcast or multicast service. The base station further comprises means for determining an optimized precoding vector for transmitting the service to the user equipments, wherein the determination of the optimized precoding vector is performed by means for analyzing the feedbacks.

In another aspect, a method of receiving a broadcast or multicast service in a digital wireless telecommunication network is disclosed, the digital wireless telecommunication network comprising a base station comprising a set of antennas for providing the service.

In another aspect, a user equipment is disclosed, the user equipment being adapted for receiving a broadcast or multicast service in a digital wireless telecommunication network, the digital wireless telecommunication network comprising a base station comprising a set of antennas for providing the service.

In another aspect, the invention relates to a coordination entity, the coordination entity being adapted for configuring base stations for providing a broadcast or multicast service to user equipments in a digital wireless telecommunication network, the base stations comprising a set of antennas for providing the service to the user equipments, the base stations comprising means for sending broadcast or multicast service data to the user equipments, the coordination entity comprising means for receiving feedbacks from the user equipments in response to the sent data, the feedbacks comprising user equipment reception quality information and/or a precoding vector information, wherein the precoding vector information indicates for each of the user equipments a precoding vector for reception of the broadcast or multicast service. The coordination entity further comprises means for determining optimized precoding vectors for transmitting the service by the base stations to the user equipments, wherein the determination of the optimized precoding vectors is performed by means for analyzing the feedbacks and means for configuring the base stations by transmitting the optimized precoding vectors to the base stations.

Such a coordination entity has the advantage, that it can coordinate the usage of multiple antennas associated to different base stations in order to provide and coordinate a larger antenna array spanning multiple basestations . Therewith, especially for user equipments which are spatially located on the border of neighboring cells which are served by different base stations, an improved reception quality can be provided by individually adjusting precoding vectors for each of the participating base stations, coordinated by the MCE. This means, that instead of the individual base stations, the MCE uses the UE feedbacks to control the usage of the precoding vectors by the base stations of the resulting collaborative MIMO area. In this context it has to be noted that the feedback of the UEs is base station specific.

In another aspect, the invention relates to a computer program product comprising computer executable instructions adapted to perform the method of providing a broadcast or multicast service to user equipments in a digital wireless telecommunication network according to the invention and the method of receiving a broadcast or multicast service in a digital wireless telecommunication network according to the invention.

**Brief description of the drawings**

In the following preferred embodiments of the invention will be described in greater detail by way of example only making reference to the drawings in which:

Figure 1      shows a block diagram of a wireless telecommunication network,

Figure 2      shows a flowchart illustrating a method of providing a service to user equipments,

Figure 3      shows a flowchart illustrating a method of receiving a service by a user equipment,

Figure 4      shows a flowchart illustrating a method of providing a service to user equipments,

Figure 5      shows a further block diagram of a wireless telecommunication network.

## Detailed description

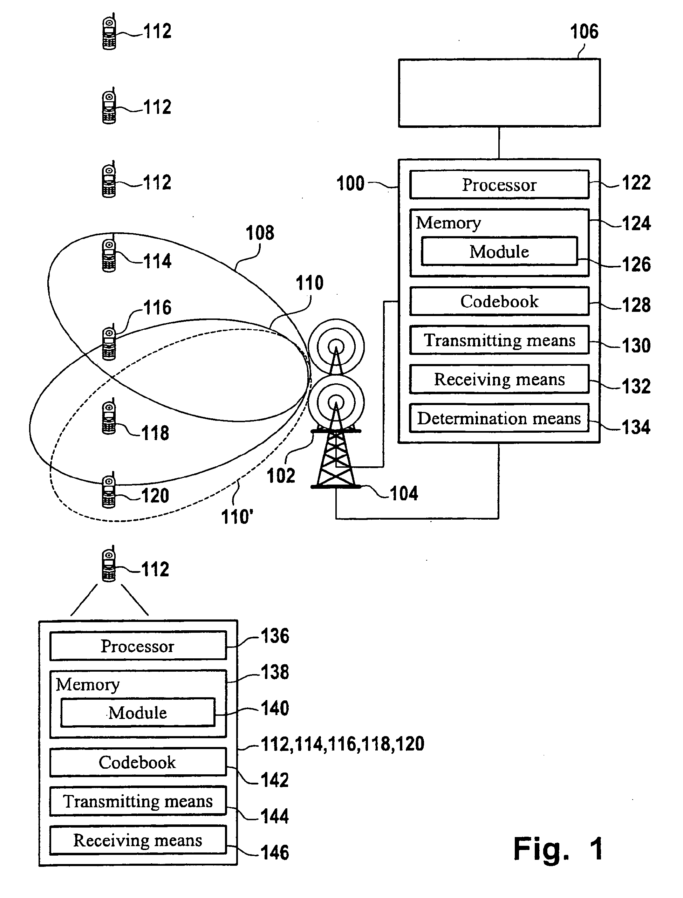

Fig. 1 shows a block diagram of a wireless telecommunication network. The wireless telecommunication network comprises a core network comprising a BM-SC (broadcast/multicast service centre) 106 and a base station 100. The base station 100 comprises an antenna array comprising a set of antennas 102 and 104. Using beam patterns 108 and 110, the base station 100 provides a multimedia service via the respective antennas 102 and 104 to user equipments 112, 114, 116, 118 and 120. Thereby, in the antenna array the antennas 102 and 104 are closely spaced antennas. The beam patterns 108 and 110 are generated by using the closely spaced antennas 102 and 104 in a coordinated way, i.e. by employing a precoding vector.

The base station 100 further comprises a processor 122, a memory 124, a codebook 128, transmitting means 130, receiving means 132 and determination means 134. Using the antennas 102 and 104 the base station 100 sends broadcast or multicast service data to the user equipments 112-120. Also present in the telecommunication network are user equipments 112 which are currently not receiving the broadcast or multicast service data from the base station 100.

Each of the user equipments 112-120 comprises a processor 136, a memory 138, transmitting means 144 and receiving means 146. The user equipments further comprise a codebook 142 which comprises the same information as a codebook 128 stored at a base station 100. The codebook 142 may thereby have been received previously from the base station 100 by the receiving means 146 of the user equipment. For this purpose, the base station 100 has transmitted its codebook 128 previously using its transmitting means 130 via the antennas 102 and/or 104 to the user equipments.

As already mentioned, the base station is transmitting a broadcast or multicast service data using its transmitting means 130 to the user equipments. Upon receiving of the broadcast or multicast service data by the user equipments, using the module 140 comprised in the memory 138 each user equipment individually generates a feedback. This feedback is then transmitted using the transmitting means 144 of the user equipment to the base station 100 where it is received by the base station receiving means 132. Such a generation of a feedback and transmission of the feedback is performed by the user equipments.112-120

The feedback generated by the user equipments 112-120 comprises user equipment reception quality information and/or a precoding vector information, wherein the precoding vector information indicates for each of the user equipments 112-120 a precoding vector for reception of the broadcast or multicast service. Such a precoding vector is thereby one of the precoding vectors comprised in the codebook 142. In an embodiment of the invention, each of the user equipments may calculate a CQI for each of the precoding vectors comprised in the codebook 142 such that the feedback transmitted from the user equipments to the base station 100 comprises a list of precoding vectors, wherein each of said precoding vectors is assigned an estimated CQI value the user equipment expects for receiving the broadcast or multicast service data from the base station in case the base station uses said respective precoding vector.

Alternatively, the user equipments may send a preferred precoding vector or with reference to the codebook 142 an index of a preferred precoding vector to the base station 100, wherein the preferred precoding vector corresponds to the precoding vector which is estimated to be the most suitable precoding vector for reception of the broadcast or multicast service data by the user equipment. In yet another alternative the base station may comprise in the feedback only a CQI, ACK or NAK with respect to the precoding vector currently used for transmission of the broadcast or multicast service data from the base station to the user equipment.

The base station 100 receives the feedbacks from the user equipments 112-120 and using its determination means 134 determines an optimized precoding vector for transmitting the service to all user equipments 112-120, wherein the determination of the optimized precoding vector is performed using the module 126 which is adapted for analyzing the entirety of all feedbacks from all user equipments 112-120. Therewith, since all feedbacks from all user equipment are included in the determination for the most suitable precoding vector, it is possible to determine an optimized precoding vector which fulfils the reception quality requirements of most user equipments 112-120 in an optimized way.

Single cell point-to-multi-point transmission is selected by the access network when only a few users as shown in Fig. 1 are interested in the MBMS service. In the embodiment of Fig. 1, the users for the particular MBSM service are clustered in a certain area served by the base station 100. Therefore it is advantageous to use beamforming. Such a clustering of users in a certain area of a cell is very common, for example in particular when there are some geographic restrictions (e.g. street canyons) or location based MBMS services whereby users are supposed to receive a certain MBMS service only for the area where they are located (e.g. road directories).

In Fig. 1, the user equipments 114 and 116 are already receiving the broadcast or multicast service data via the antennas 102 and 104 and the respective beam pattern 108 in an optimized way. However, with respect to the user equipments 118 and 120 which are served via the beam pattern 110 by the antennas 102 and 104, only the user equipment 118 is receiving the broadcast or multicast service data from the base station 100 at a sufficient high reception quality. However, the user equipment 120 is not sufficiently well located within the beam pattern 110. The user equipment 112 is not located at all within the beam patterns 110 or 108. A respective feedback of the user equipments 112 and 120 comprises a poor service data reception quality. Therefore the user equipments 112 and 120 are especially considered by the base station 100 in order to optimize the beam patterns 108 and 110. This results in a determination of an optimized precoding vector by the base station 100, wherein the optimized precoding vector results in a beam pattern comprising the beam pattern 108 and the beam pattern 110'. However, unfortunately in the embodiment of Fig. 1 it is not possible to modify said beam patterns in such a way to also include the user equipments 112 in the beam patterns.

Based on the feedback provided by all the user equipments 112-120 that have requested the MBMS reception, the base station 100 will choose the transmission parameters for MBMS. Thereby, besides determination of optimized precoding vectors the relevant physical layer transmission parameters which are adapted by the base station 100 are power settings, transmission ranks, MCS, data rates, TTIs etc. Regarding the precoding vector, the precoding vector is chosen such that a certain error condition is satisfied on the group of users that is interested in receiving MBMS transmission.

Thereby, a high MBMS reception quality is desired for the majority of the group of interested UIs, i.e. $(1 - \eta)$ percent of the interested user equipments. Thereby, the 'majority' of interested user equipments may be defined as user equipments with a service data reception quality above a predetermined threshold. In other words, an MBMS reception is desired to be guaranteed for $(1 - \eta)$ percent of all interested UEs that have a maximum tolerable block error rate (BLER) below a certain maximum or threshold. Therefore, the optimization problem to be solved for the precoding vector $\theta$ can be expressed as:

$$\theta_{opt} = \arg \min_\theta \{ BLER(y_\eta(\theta)) \},$$

whereby the minimization is over all possible precoding vectors $\theta$, $y_\eta(\theta)$ is the MBMS received signal transmitted with the precoding vector $\theta$ for the $\eta$ percentile user, and BLER is the block error rate. It has to be noted, that the $\eta$ percentile user is also changing with the precoding vector employed.

A simplified method which helps to solve the optimization problem described in the above equation is to determine from the codebook a set of precoding vectors, wherein the distances of the preferred precoding vectors from the individual precoding vectors comprised in the set of precoding vectors are below a predetermined value. Thereby, the preferred precoding vectors are the precoding vectors which have been provided in the feedback from the user equipments 112-120 to the base station 100. Thereafter, the preferred precoding vector of the user equipment with the lowest service data reception quality of the user equipments is discarded. However, this further requires that said preferred precoding vector is not comprised in the set of precoding vectors. With discarding said preferred precoding vector of course the user equipment is also discarded from further service data reception. The steps of determining from the codebook the set of precoding vectors, discarding the preferred precoding vector of a user equipment with the lowest service data reception quality of the user equipments and which is not comprised in the set of precoding vectors and a step of discarding the user equipment for service data reception is repeated until all remaining preferred precoding vectors are comprised in the set of precoding vectors. Finally, the optimized precoding vector is selected from the set of precoding vectors, wherein the optimized precoding vector is the precoding vector closest to the preferred precoding vector of the user equipment with the lowest service data reception quality of the user equipments.

This means, with the above mentioned procedure a group of user equipments is determined for which an MBMS transmission is targeted. The selection of a final set of precoding vectors ensures a reasonable performance for the majority of the users. Selecting the optimized precoding vector from said set of precoding vectors implies some fine tuning for the remaining worse case users. It has to be noted that the selection of the set of precoding vectors does not necessarily exclude any user equipments from MBMS reception. However, it cannot be guaranteed that all user equipments interested in receiving the MBMS service are capable of doing so. In the embodiment of Fig. 1, because of the bad spatial location of the user equipments 112, these UEs were excluded by the base station from reception of the MBMS service.

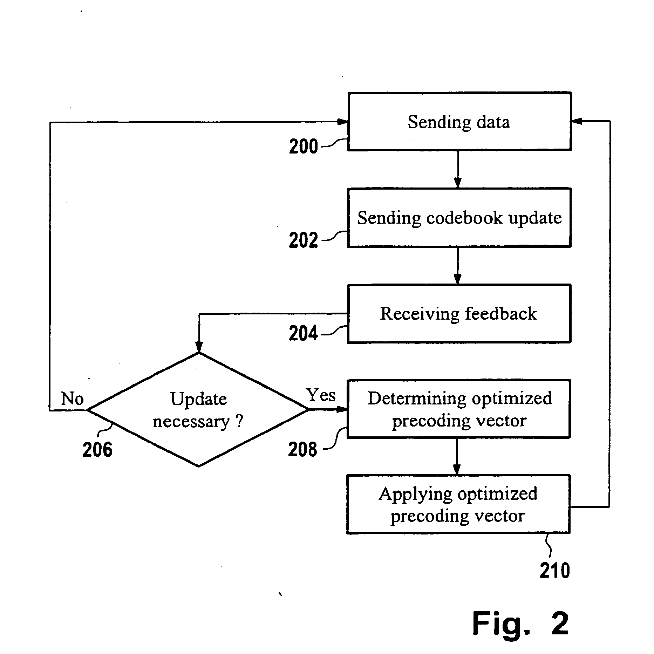

Fig. 2 shows a flowchart illustrating a method of providing a service to user equipments. In step 200, broadcast or multicast service data is sent to user equipments. Optionally, in step 202 also a codebook update is sent to the user equipments if the codebook comprising information on precoding vectors has changed in such a way that a codebook update is necessary. Either after step 200 or step 202, in response to sending the reference signals or data to the user equipments in step 204 a feedback is received from the user equipments. This is followed by step 206 where it is determined if an update of precoding vectors, power setting, transmission ranks, MCS, data rates, TTI etc is necessary. Thereby, such an update may be necessary because the received feedback indicates a change of the reception quality of certain user equipments wherein the change of the reception quality exceeds a predetermined threshold. An update in step 206 may also be necessary if a certain time period has passed, or if one of the user equipments drops the service or in case a further user equipment is requesting the service. In case no update is necessary in step 206, the procedure is repeated starting from step 200. However, if an update is necessary, in step 208 an optimized precoding vector is determined and applied for further transmission of MBMS data in step 210. Thereupon, the procedure is repeated starting again from step 200.

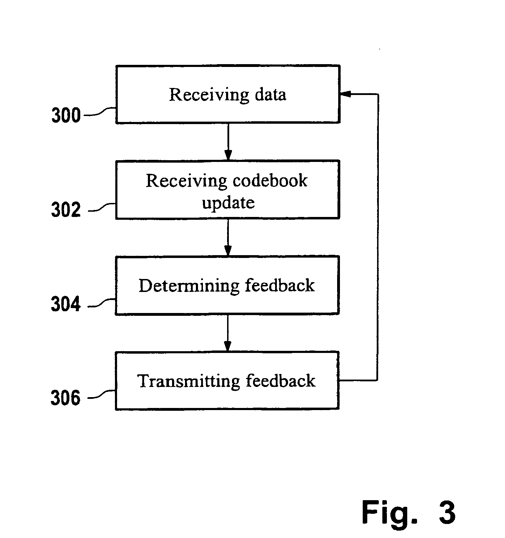

Fig. 3 shows a flowchart illustrating a method of receiving a service by a user equipment. Thereby, the flowchart in Fig. 3 is the complimentary flowchart to Fig. 2. In Fig. 3, in step 300 broadcast or multicast service data is received by a user equipment. Thereby, this may comprise multimedia data itself, pilot signals, polling or counting requests or any kind of signaling data which is related to an ongoing or upcoming transmission of MBMS data to the user equipment.

Also with receiving the data in step 300, a codebook update is received in step 302. Such a codebook update may for example be necessary if the user equipment has not yet received any codebook or if the codebook content for example at a base station has changed. Either after step 300 or step 302, in step 304 a feedback is determined wherein the feedback comprises user equipment service data reception quality information and/or a precoding vector information, wherein the precoding vector information indicates a precoding vector read from the codebook for an optimized reception of the broadcast or multicast service. In step 306, the determined feedback is transmitted to for example the base station. After step 306, the procedure repeats starting again in step 300.

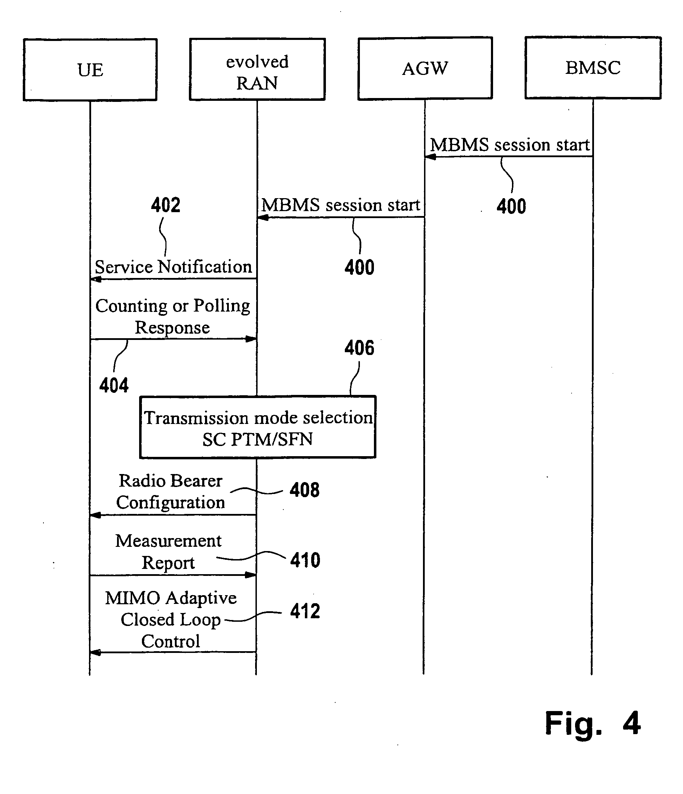

Fig. 4 shows a flowchart illustrating a method of providing a service to the user equipments. In step 400 the BM-SC initiates a start of an MBMS session by transmission of an MBMS session start command to the gateway (AGW). The gateway itself forwards the MBMS session start command to for example a base station. In response, the base station transmits in step 402 a service notification to all user equipments served by the base station. For example, in an MBMS transmission area, the radio access network may derive the number of interested users based on polling or counting mechanisms. The initial selection of the precoding is performed by the radio access network based on the initial feedback that can for example be included in the counting response where the user equipments indicate their interest for the given MBMS service. This allows the radio access network to adapt a MIMO transmission at an early stage. Therefore, MIMO transmission can be adapted even if there is no further feedback based on the actual MBMS transmission. The UE measurements for this initial feedback can be performed on the available channels, which include the MBMS traffic channel (if available), or the MBMS control channel (if available), the broadcast channel as well as the unicast channels.

Based on the counting or polling response received in step 404 from the user equipments, the radio access network (for example the MCE or a base station) may decide on a suitable transmission mode like single cell point-to-multipoint (SC-PTM) or SFN. After selection of the most suitable transmission mode in step 406 by the radio access network, in step 408 a radio bearer configuration is performed. In response the UEs provide a measurement report (feedback) to the radio access network in step 410, which finally allows the radio access network to perform a MIMO adaptive closed loop control in step 412 for determination of optimized precoding vectors for transmitting the MBMS service to the user equipments.

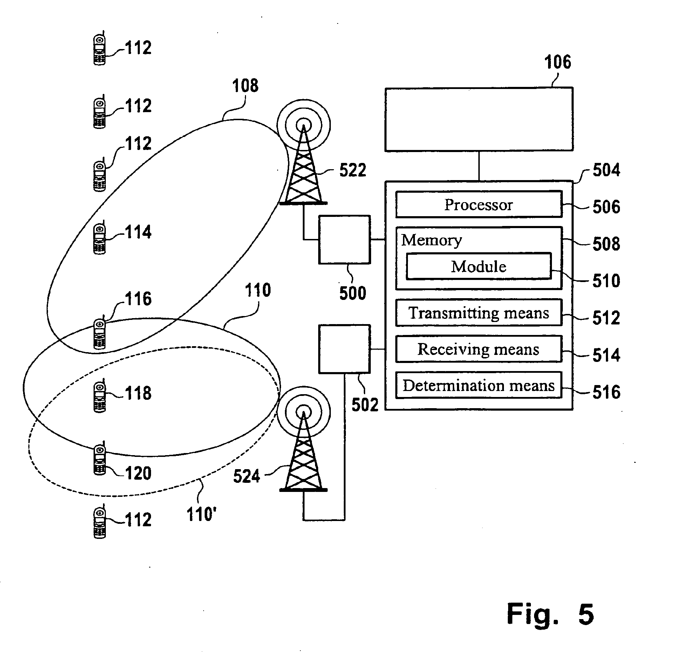

Fig. 5 shows a further block diagram of a wireless telecommunication network. Similarly as explained in Fig. 1, the telecommunication network comprises a set of user equipments 112-120, which are receiving broadcast or multicast service data. However, compared to Fig. 1 the UEs 112-120 are receiving the broadcast or multicast data via antenna arrays 522 and 524 which each provide the service to the user equipments via respective beam patterns 108 and 110. A further difference between Fig. 1 and Fig. 5 is, that in Fig. 1 the antennas 102 and 104 form one antenna array of one base station, whereas in fig. 5 the antenna array 522 is associated to a base station 500 and the antenna array 524 is associated to a further base station 502. Therewith, basically the base stations 500 and 502 operate independently of each other. However, in case of a single frequency network it may be highly effective if a collaborative MIMO transmission could be used among several base stations 500 and 502. This requires an MBMS coordination entity 504 which is adapted for configuring the base stations 500 and 502 for providing the broadcast or multicast service to the user equipments 112-120.

Similarly to the base stations 500 and 502, the coordination entity 504 comprises a processor 506 and a memory 508. The coordination entity further comprises transmitting means 512 which are used to transmit control data to the base stations 500 and 502 to adapt precoding vectors, MCS, data rates etc. at the base stations 500 and 502 controlled by the coordination entity 504. The coordination entity 504 further comprises receiving means which are required such that the user equipments 112-120 can provide respective feedbacks comprising user equipment service data reception quality information and/or precoding vector information via the base stations 500 and 502 to the coordination entity 504. Also similarly to the base stations 500 and 502, the coordination entity 504 comprises determination means 516 which in combination with the module 510 comprised in the memory 508 for analyzing the feedbacks is used to determine optimized precoding vectors for transmitting the service by the base stations 500 and 502 to the user equipments.

Therewith, based on the feedbacks of the user equipments 112-120 the coordination entity 504 may individually determine precoding vectors for transmission of the service to the user equipments by the base stations 500 and 502 in such a way that a collaborative MIMO area is defined. In other words, a collaborative optimization is performed by the coordination entity using the antenna arrays of the base station 500 and the base station 502.

In the practical example of Fig. 5 the coordina-

<p>

tion entity determines an optimized precoding vector for the user equipments 114 and 116 wherein said precoding vector is optimized for a providing of the service to the user equipments 114 and 116 only by the base station 500 and its antenna array 522. With respect to the user equipments 118 and 116 the coordination entity 504 determines a further optimized precoding vector 110' in such a way that the user equipments 118 and 120 are only served by the base station 502 by its respective antenna array 524. In order to highlight the advantage of a coordination entity 504 in such a scenario, without the presence of a coordination entity 504 the base station 502 may try to serve the user equipments 116, 118 and 120 in an optimized way. However, this would result in a beam pattern 110 which is a compromise of a moderate reception quality for the user equipments 116, 118 and 120, since no optimized precoding vector which could be used to provide the service to the user equipments 116-120 with high quality is existing. Since the coordination entity 504 recognizes that the user equipment 116 can already be served by the base station 500 in an optimized way, the adjustment of the beam pattern 110 to the beam pattern 110' provided by the base station 502 can be performed concentrating on the user equipments 118 and 120 neglecting the user equipment 116. As already discussed for Fig. 1, because of the bad spatial location of the user equipments 112, these UEs were excluded by the base station from reception of the MBMS service.

The above mentioned concept described in Figs. 1-5 applies to single cell point-to-multipoint transmission modes but it can also be extended to any MBMS solution in which there is user equipment feedback so that the feedback may contain the MBMS precoding values.

It has to be mentioned, that in a further alternative the beam patterns 108 and 110 may be optimized in such a way, that they cover the same user equipments, for example in fig. 5 the UE 116. This significantly improves the reception quality of such a UE 116.

List of Reference Numerals

| 100 | Base station |
| 102 | Antenna |
| 104 | Antenna |
| 106 | BM-SC |
| 108 | Beam pattern |
| 110 | Beam pattern |
| 112 | UE |
| 114 | UE |
| 116 | UE |
| 118 | EU |
| 120 | UE |
| 122 | Processor |
| 124 | Memory |
| 126 | Module |
| 128 | Codebook |
| 130 | Transmitting means |
| 132 | Receiving means |
| 134 | Determination means |
| 136 | Processor |
| 138 | Memory |
| 140 | Module |
| 142 | Codebook |
| 144 | Transmitting means |
| 146 | Receiving means |
| 500 | Base station |
| 502 | Base station |
| 504 | MCE |
| 506 | Processor |
| 508 | Memory |
| 510 | Module |
| 512 | Transmitting means |
| 514 | Receiving means |
| 516 | Determination means |
| 522 | Antenna array |
| 524 | Antenna array |

**Claims**

1. A method of providing a broadcast or multicast service to user equipments (UEs, 114; 116; 118; 120) for a digital wireless telecommunication network, the digital wireless telecommunication network comprising a set of antennas (102; 104) for providing the service to the user equipments (114; 116; 118; 120), the method comprising:

- sending by base stations broadcast or multicast service data to the user equipments (114; 116; 118; 120),
- sending a codebook (128) to the user equipments (114; 116; 118; 120), the codebook (128) comprising a lookup table, the lookup table associating precoding vectors with indexes,
- receiving by the base stations feedbacks from the user equipments (114; 116; 118; 120) in response to the sent data, the feedbacks comprising user equipment service data reception quality information and/or a precoding vector information, wherein the precoding vector information indicates for each of the user equipments (114; 116; 118; 120) a precoding vector for reception of the broadcast or multicast service, wherein the precoding vector information is an index of the lookup table,
- providing the feedbacks by the base stations to a coordination entity (504),
- in response to the feedbacks provided to the coordination entity (504), receiving by the base stations indexes of optimized precoding vectors from the coordination entity (504) for transmitting the service to the user equipments (114; 116; 118; 120),
- updating dynamically the codebook.

2. The method of claim 1, wherein the precoding vector information indicate preferred precoding vectors of the user equipments (114; 116; 118; 120) for reception of the broadcast or multicast service data.

3. The method of claim 1, wherein the determination of the optimized precoding vector is performed periodically in time and/or in case one of the user equipments (114; 116; 118; 120) drops the service and/or in case a further user equipment is requesting the service and/or in case a change of the reception quality exceeds a predetermined threshold.

4. The method of claim 2, wherein the determination of the optimized precoding vector by analyzing the feedback comprises:

   - discarding the user equipments (114; 116; 118; 120) with a service data reception quality below a predetermined threshold,
   - maximizing the service data reception quality for the user equipment with the lowest service data reception quality of the remaining user equipments (114; 116; 118; 120), the maximization resulting in the optimized precoding vector.

5. A base station (100), the base station (100) being adapted for providing a broadcast or multicast service to user equipments (UEs; 114; 116; 118; 120) for a digital wireless telecommunication network, the base station (100) comprising a set of antennas (102; 104) for providing the service to the user equipments (114; 116; 118; 120), the base station (100) comprising:

   - means (130) for sending broadcast or multicast service data to the user equipments (114; 116; 118; 120),
   - means for sending a codebook (128) to the user equipments (114; 116; 118; 120), the codebook (128) comprising a lookup table, the lookup table associating precoding vectors with indexes,
   - means (132) for receiving feedbacks from the user equipment In response to the sent data, the feedbacks comprising user equipment service data reception quality information and/or a precoding vector information, wherein the precoding vector information indicates for each of the user equipments (114; 116; 118; 120) a precoding vector for reception of the broadcast or multicast service, wherein the precoding vector information is an index of the lookup table,

   - means for providing the feedbacks to a coordination entity (504),
   - means for receiving indexes of optimized precoding vectors from the coordination entity (504) in response to feedbacks provided to the coordination entity (504) for transmitting the service to the user equipments (114; 116; 118; 120)
   - means for updating dynamically the codebook.

6. A coordination entity (504), the coordination entity (504) being adapted for configuring base stations (500; 502) for providing a broadcast or multicast service to user equipments (UEs; 114; 116; 118; 120) for a digital wireless telecommunication network, the base stations (500; 502) comprising a set of antennas (102; 104) for providing the service to the user equipments (114; 116; 118; 120), the base stations (500; 502) comprising means for sending broadcast or multicast service data to the user equipments (114; 116; 118; 120), the coordination entity (504) comprising:

   - means (514) for receiving feedbacks from the user equipments (114; 116; 118; 120) in response to the sent data, the feedbacks comprising user equipment service data reception quality information and/or a precoding vector information, wherein the precoding vector information indicates for each of the user equipments (114; 116; 118; 120) a precoding vector for reception of the broadcast or multicast service, wherein the precoding vector information is an index of a lookup table, and wherein the lookup table is comprised by a dynamically updated codebook,
   - means (516) for determining indexes of optimized precoding vectors for transmitting the service by the base stations (500; 502) to the user equipments (114; 116; 118; 120), wherein the determination of the optimized precoding vectors is performed by means for analyzing the feedbacks,
   - means for configuring the base stations (500; 502) by means (512) for transmitting the indexes of the optimized precoding vectors to the base stations (500; 502).

7. A method of configuring base stations (500; 502) for providing a broadcast or multicast service to user equipments (UEs; 114; 116; 118; 120) in a digital wireless telecommunication network, the base stations (500; 502) comprising a set of antennas (102; 104) for providing the service to the user equipments (114; 116; 118; 120), the base stations (500; 502) comprising means for sending broadcast or multicast service data to the user equipments (114; 116; 118; 120), the method comprising:

- receiving feedbacks from the user equipments (114; 118; 118; 120) in response to the sent data, the feedbacks comprising user equipment service data reception quality information and/or a precoding vector information, wherein the precoding vector information indicates for each of the user equipments (114; 116; 118; 120) a precoding vector for reception of the broadcast or multicast service,

- sending a codebook (128) to the user equipments (114; 116; 118; 120), the codebook (128) comprising a lookup table, the lookup table associating precoding vectors with indexes,

- determining optimized precoding vectors for transmitting the service by the base stations (500; 502) to the user equipments (114; 116; 118; 120), wherein the determination of the optimized precoding vectors is performed by means for analyzing the feedbacks,

- configuring the base stations (500; 502) by transmitting an index from the lookup table associated with the optimized precoding vectors to the base stations (500; 502)

- updating dynamically the codebook.

**8.** A computer program product comprising computer executable instructions to perform any of the method steps as claimed In claims 1 to 4 or to perform the method step as claimed in claim 7.

**Patentansprüche**

**1.** Verfahren zur Bereitstellung eines Broadcast- oder Multicast-Dienstes an Benutzerendgeräte (UEs, 114; 116; 118; 120) für ein drahtloses digitales Telekommunikationsnetzwerk, wobei das drahtlose digitale Telekommunikationsnetzwerk einen Satz von Antennen (102; 104) für die Bereitstellung des Dienstes an die Benutzerendgeräte (114; 116; 118; 120) umfasst, wobei das Verfahren umfasst:

- Senden, durch Basisstationen, von Broadcast- oder Multicast-Dienst-Daten an die Benutzerendgeräte (114; 116; 118; 120),
- Senden eines Codebuchs (128) an die Benutzerendgeräte (114; 116; 118; 120), wobei das Codebuch (128) eine Lookup-Tabelle enthält, wobei die Lookup-Tabelle Vorcodiervektoren mit Indizes assoziiert,
- Empfangen, an den Basisstationen, von Rückkopplungen von den Benutzerendgeräten (114; 116; 118; 120) in Reaktion auf die gesendeten Daten, wobei die Rückkopplungen Benutzerendgerät-Dienstdatenempfangsqualitätsinformationen und/oder eine Vorcodiervektor-Information umfassen, wobei die Vorcodiervektor-Information für ein jedes der Benutzerendgeräte (114; 116; 118; 120) einen Vorcodiervektor für den Empfang des Broadcast- oder Multicast-Dienstes angibt, wobei die Vorcodiervektor-Information ein Index der Lookup-Tabelle ist,

- Bereitstellen der Rückkopplungen durch die Basisstationen an eine Koordinationsentität (504),
- in Reaktion auf die an die Koordinationsentität (504) bereitgestellten Rückkopplungen, Empfangen, an den Basisstationen, von Indizes von optimierten Vorcodiervektoren von der Koordinationsentität (504) zum Übertragen des Dienstes an die Benutzerendgeräte (114; 116; 118; 120),
- dynamisches Aktualisieren des Codebuchs.

**2.** Verfahren nach Anspruch 1, wobei die Vorcodiervektor-Informationen bevorzugte Vorcodiervektoren der Benutzerendgeräte (114; 116; 118; 120) für den Empfang der Broadcast- oder Multicast-Dienstdaten angeben.

**3.** Verfahren nach Anspruch 1, wobei das Ermitteln des optimierten Vorcodiervektors zeitlich periodisch und/oder wenn eines der Benutzerendgeräte (114; 116; 118; 120) den Dienst verwirft und/oder wenn ein weiteres Benutzerendgerät den Dienst anfordert und/oder wenn eine Veränderung der Empfangsqualität einen vorbestimmten Grenzwert überschreitet durchgeführt wird.

**4.** Verfahren nach Anspruch 2, wobei das Ermitteln des optimierten Vorcodiervektors durch Analysieren der Rückkopplung umfasst:

- Verwerfen derjenigen Benutzerendgeräte (114; 116; 118; 120), deren Dienstdatenempfangsqualität einen vorbestimmten Grenzwert unterschreitet,
- Maximieren der Dienstdatenempfangsqualität für dasjenige Benutzerendgerät, welches die niedrigste Dienstdatenempfangsqualität unter den restlichen Benutzerendgeräten (114; 116; 118; 120) aufweist, wobei das Maximieren zu dem optimierten Vorcodiervektor führt.

**5.** Basisstation (100), wobei die Basisstation zum Bereitstellen eines Broadcast- oder Multicast-Dienstes an Benutzerendgeräte (UEs; 114; 116; 118; 120) für ein drahtloses digitales Telekommunikationsnetzwerk ausgelegt ist, wobei die Basisstation (100) einen Satz von Antennen (102; 104) für die Bereitstellung des Dienstes an die Benutzerendgeräte (114; 116; 118; 120) umfasst, wobei die Basisstation umfasst:

- Mittel (130) zum Senden von Broadcast- oder Multicast-Dienst-Daten an die Benutzerendgeräte (114; 116; 118; 120),

- Mittel zum Senden eines Codebuchs (128) an die Benutzerendgeräte (114; 116; 118; 120), wobei das Codebuch (128) eine Lookup-Tabelle enthält, wobei die Lookup-Tabelle Vorcodiervektoren mit Indizes assoziiert,
- Mittel (132) zum Empfangen von Rückkopplungen von dem Benutzerendgerät in Reaktion auf die gesendeten Daten, wobei die Rückkopplungen Benutzerendgerät-Dienstdatenempfangsqualitätsinformationen und/oder eine Vorcodiervektor-Information umfassen, wobei die Vorcodiervektor-Information für ein jedes der Benutzerendgeräte (114; 116; 118; 120) einen Vorcodiervektor für den Empfang des Broadcast- oder Multicast-Dienstes angibt, wobei die Vorcodiervektor-Information ein Index der Lookup-Tabelle ist,
- Mittel zum Bereitstellen der Rückkopplungen an eine Koordinationsentität (504),
- Mittel zum Empfangen von Indizes von optimierten Vorcodiervektoren von der Koordinationsentität (504) in Reaktion auf an die Koordinationsentität (504) bereitgestellte Rückkopplungen zum Übertragen des Dienstes an die Benutzerendgeräte (114; 116; 118; 120),
- Mittel zum dynamischen Aktualisieren des Codebuchs.

6.  Koordinationsentität (504), wobei die Koordinationsentität (504) für das Konfigurieren von Basisstationen (500; 502) zur Bereitstellung eines Broadcast- oder Multicast-Dienstes an Benutzerendgeräte (UEs; 114; 116; 118; 120) für ein drahtloses digitales Telekommunikationsnetzwerk ausgelegt ist, wobei die Basisstationen (500; 502) einen Satz von Antennen (102; 104) für die Bereitstellung des Dienstes an die Benutzerendgeräte (114; 116; 118; 120) umfassen, wobei die Basisstationen (500; 502) Mittel zum Senden von Broadcast- oder Multicast-Dienst-Daten an die Benutzerendgeräte (114; 116; 118; 120) umfassen, wobei die Koordinationseinheit (504) umfasst:,

     - Mittel (514) zum Empfangen von Rückkopplungen von den Benutzerendgeräten (114; 116; 118; 120) in Reaktion auf die gesendeten Daten, wobei die Rückkopplungen Benutzerendgerät-Dienstdatenempfangsqualitätsinformationen und/oder eine Vorcodiervektor-Information umfassen, wobei die Vorcodiervektor-Information für ein jedes der Benutzerendgeräte (114; 116; 118; 120) einen Vorcodiervektor für den Empfang des Broadcast- oder Multicast-Dienstes angibt, wobei die Vorcodiervektor-Information ein Index einer Lookup-Tabelle ist, und wobei die Lookup-Tabelle in einem dynamisch aktualisierten Codebuch enthalten ist,

     - Mittel (516) zum Ermitteln von Indizes von optimierten Vorcodiervektoren für die Übertragung des Dienstes durch die Basisstationen (500; 502) an die Benutzerendgeräte (114; 116; 118; 120), wobei das Ermitteln der optimierten Vorcodiervektoren durch Mittel zum Analysieren der Rückkopplungen durchgeführt wird,
     - Mittel zum Konfigurieren der Basisstationen (500; 502) durch Mittel (512) zum Übertragen der Indizes der optimierten Vorcodiervektoren an die Basisstationen (500; 502).

7.  Verfahren zur Konfiguration von Basisstationen (500; 502) für die Bereitstellung eines Broadcast- oder Multicast-Dienstes an Benutzerendgeräte (UEs; 114; 116; 118; 120) in einem drahtlosen digitalen Telekommunikationsnetzwerk, wobei die Basisstationen (502; 502) einen Satz von Antennen (102; 104) zum Bereitstellen des Dienstes an die Benutzerendgeräte (114; 116; 118; 120) umfassen, wobei die Basisstationen (500; 502) Mittel zum Senden von Broadcast- oder Multicast-Dienst-Daten an die Benutzerendgeräte (114; 116; 118; 120) umfassen, wobei das Verfahren umfasst:,

     - Empfangen von Rückkopplungen von den Benutzerendgeräten (114; 116; 118; 120) in Reaktion auf die gesendeten Daten, wobei die Rückkopplungen Benutzerendgerät-Dienstdatenempfangsqualitätsinformationen und/oder eine Vorcodiervektor-Information umfassen, wobei die Vorcodiervektor-Information für ein jedes der Benutzerendgeräte (114; 116; 118; 120) einen Vorcodiervektor für den Empfang des Broadcast- oder Multicast-Dienstes angibt,
     - Senden eines Codebuchs (128) an die Benutzerendgeräte (114; 116; 118; 120), wobei das Codebuch (128) eine Lookup-Tabelle umfasst, wobei die Lookup-Tabelle Vorcodiervektoren mit Indizes assoziiert,
     - Ermitteln von optimierten Vorcodiervektoren zum Übertragen des Dienstes durch die Basisstationen (500; 502) an die Benutzerendgeräte (114; 116; 118; 120), wobei das Ermitteln der optimierten Vorcodier-Vektoren durch Mittel zum Analysieren der Rückkopplungen durchgeführt wird,
     - Konfigurieren der Basisstationen (500; 502) durch Übertragen eines Index von der mit den optimierten Vorcodiervektoren assoziierten Lookup-Tabelle an die Basisstationen (500; 502),
     - dynamisches Aktualisieren des Codebuchs.

8.  Computerprogramm-Produkt mit computerausführbaren Befehlen zum Durchführen der Verfahrensschritte gemäß den Ansprüchen 1 bis 4, oder zum Durchführen des Verfahrensschritts gemäß Anspruch 7.

**Revendications**

1. Procédé de fourniture d'un service de diffusion ou de multidiffusion à des équipements utilisateurs (UE, 114 ; 116 ; 118 ; 120) pour un réseau de télécommunication sans fil numérique, le réseau de télécommunication sans fil numérique comprenant un ensemble d'antennes (102 ; 104) pour fournir le service aux équipements utilisateurs (114 ; 116 ; 118 ; 120), le procédé comprenant les étapes suivantes :

   - envoyer, au moyen de stations de base, des données de service de diffusion ou de multidiffusion aux équipements utilisateurs (114 ; 116 ; 118 ; 120),
   - envoyer un livre de codes (128) aux équipements utilisateurs (114 ; 116 ; 118 ; 120), le livre de codes (128) comprenant une table de consultation, la table de consultation associant des vecteurs de précodage à des indices,
   - recevoir, au moyen des stations de base, des rétroactions provenant des équipements utilisateurs (114 ; 116 ; 118 ; 120) en réponse aux données envoyées, les rétroactions comprenant des informations de qualité de réception de données de service d'équipement utilisateur et/ou des informations de vecteur de précodage, les informations de vecteur de précodage indiquant pour chacun des équipements utilisateurs (114 ; 116 ; 118 ; 120) un vecteur de précodage pour la réception du service de diffusion ou de multidiffusion, les informations de vecteur de précodage étant un indice de la table de consultation,
   - fournir les rétroactions, au moyen des stations de base, à une entité de coordination (504),
   - en réponse aux rétroactions fournies à l'entité de coordination (504), recevoir, au moyen des stations de base, des indices de vecteurs de précodage optimisés provenant de l'entité de coordination (504) pour transmettre le service aux équipements utilisateurs (114 ; 116 ; 118 ; 120),
   - mettre à jour dynamiquement le livre de codes.

2. Procédé selon la revendication 1, dans lequel les informations de vecteur de précodage indiquent des vecteurs de précodage préférés des équipements utilisateurs (114 ; 116 ; 118 ; 120) pour la réception des données de service de diffusion ou de multidiffusion.

3. Procédé selon la revendication 1, dans lequel la détermination du vecteur de précodage optimisé est réalisée périodiquement dans le temps et/ou dans le cas où un des équipements utilisateurs (114 ;

116 ; 118 ; 120) interrompt le service et/ou dans le cas où un autre équipement utilisateur demande le service et/ou dans le cas où un changement de la qualité de réception dépasse un seuil prédéterminé.

4. Procédé selon la revendication 2, dans lequel la détermination du vecteur de précodage optimisé en analysant la rétroaction comprend les étapes suivantes :

   - supprimer les équipements utilisateurs (114 ; 116 ; 118 ; 120) ayant une qualité de réception de données de service inférieure à un seuil prédéterminé,
   - optimiser la qualité de réception de données de service de l'équipement utilisateur ayant la qualité de réception de données de service la plus faible des équipements utilisateurs restants (114 ; 116 ; 118 ; 120), l'optimisation ayant pour résultat le vecteur de précodage optimisé.

5. Station de base (100), la station de base (100) étant adaptée pour fournir un service de diffusion ou de multidiffusion à des équipements utilisateurs (UE, 114 ; 116 ; 118 ; 120) pour un réseau de télécommunication sans fil numérique, la station de base (100) comprenant un ensemble d'antennes (102 ; 104) pour fournir le service aux équipements utilisateurs (114 ; 116 ; 118 ; 120), la station de base (100) comprenant :

   - des moyens (130) pour envoyer des données de service de diffusion ou de multidiffusion aux équipements utilisateurs (114 ; 116 ; 118 ; 120),
   - des moyens pour envoyer un livre de codes (128) aux équipements utilisateurs (114 ; 116 ; 118 ; 120), le livre de codes (128) comprenant une table de consultation, la table de consultation associant des vecteurs de précodage à des indices,
   - des moyens (132) pour recevoir des rétroactions provenant de l'équipement utilisateur en réponse aux données envoyées, les rétroactions comprenant des informations de qualité de réception de données de service d'équipement utilisateur et/ou des informations de vecteur de précodage, les informations de vecteur de précodage indiquant pour chacun des équipements utilisateurs (114 ; 116 ; 118 ; 120) un vecteur de précodage pour la réception du service de diffusion ou de multidiffusion, les informations de vecteur de précodage étant un indice de la table de consultation,
   - des moyens pour fournir les rétroactions à une entité de coordination (504),
   - des moyens pour recevoir des indices de vecteurs de précodage optimisés provenant de l'entité de coordination (504) en réponse à des rétroactions fournies à l'entité de coordination (504) pour transmettre le service aux équipements utilisateurs (114 ; 116 ; 118 ; 120),
- des moyens pour mettre à jour dynamiquement le livre de codes.

6. Entité de coordination (504), l'entité de coordination (504) étant adaptée pour configurer des stations de base (500 ; 502) pour fournir un service de diffusion ou de multidiffusion à des équipements utilisateurs (UE ; 114 ; 116 ; 118 ; 120) pour un réseau de télécommunication sans fil numérique, les stations de base (500 ; 502) comprenant un ensemble d'antennes (102 ; 104) pour fournir le service aux équipements utilisateurs (114 ; 116 ; 118 ; 120), les stations de base (500 ; 502) comprenant des moyens pour envoyer des données de service de diffusion ou de multidiffusion aux équipements utilisateurs (114 ; 116 ; 118 ; 120), l'entité de coordination (504) comprenant :

- des moyens (514) pour recevoir des rétroactions provenant des équipements utilisateurs (114 ; 116 ; 118 ; 120) en réponse aux données envoyées, les rétroactions comprenant des informations de qualité de réception de données de service d'équipement utilisateur et/ou des informations de vecteur de précodage, les informations de vecteur de précodage indiquant pour chacun des équipements utilisateurs (114 ; 116 ; 118 ; 120) un vecteur de précodage pour la réception du service de diffusion ou de multidiffusion, les informations de vecteur de précodage étant un indice d'une table de consultation, la table de consultation étant constituée d'un livre de codes mis à jour dynamiquement,
- des moyens (516) pour déterminer des indices de vecteurs de précodage optimisés pour transmettre le service au moyen des stations de base (500 ; 502) aux équipements utilisateurs (114 ; 116 ; 118 ; 120), la détermination des vecteurs de précodage optimisés étant réalisée au moyen de l'analyse des rétroactions,
- des moyens pour configurer les stations de base (500 ; 502) au moyen (512) de la transmission des indices des vecteurs de précodage optimisés aux stations de base (500 ; 502).

7. Procédé de configuration de stations de base (500 ; 502) pour fournir un service de diffusion ou de multidiffusion à des équipements utilisateurs (UE ; 114 ; 116 ; 118 ; 120) dans un réseau de télécommunication sans fil numérique, les stations de base (500 ; 502) comprenant un ensemble d'antennes (102 ; 104) pour fournir le service aux équipements utilisateurs (114 ; 116 ; 118 ; 120) les stations de base (500 ; 502) comprenant des moyens pour envoyer des données de service de diffusion ou de multidiffusion aux équipements utilisateurs (114 ; 116 ; 118 ; 120), le procédé comprenant les étapes suivantes :

- recevoir des rétroactions provenant des équipements utilisateurs (114 ; 116 ; 118 ; 120) en réponse aux données envoyées, les rétroactions comprenant des informations de qualité de réception de données de service d'équipement utilisateur et/ou des informations de vecteur de précodage, les informations de vecteur de précodage indiquant pour chacun des équipements utilisateurs (114 ; 116 ; 118 ; 120) un vecteur de précodage pour la réception du service de diffusion ou de multidiffusion,
- envoyer un livre de codes (128) aux équipements utilisateurs (114 ; 116 ; 118 ; 120), le livre de codes (128) comprenant une table de consultation, la table de consultation associant des vecteurs de précodage à des indices,
- déterminer des vecteurs de précodage optimisés pour transmettre le service au moyen des stations de base (500 ; 502) aux équipements utilisateurs (114 ; 116 ; 118 ; 120), la détermination des vecteurs de précodage optimisés étant réalisée au moyen de l'analyse des rétroactions,
- configurer les stations de base (500 ; 502) en transmettant un indice provenant de la table de consultation associé aux vecteurs de précodage optimisés aux stations de base (500 ; 502),
- mettre à jour dynamiquement le livre de codes.

8. Produit de programme informatique comprenant des instructions exécutables par ordinateur pour réaliser l'une quelconque des étapes de procédé selon les revendications 1 à 4 ou pour réaliser l'étape de procédé selon la revendication 7.

**Fig. 1**

**Fig. 2**

**300** — | Receiving data |

**302** — | Receiving codebook update |

**304** — | Determining feedback |

**306** — | Transmitting feedback |

# Fig. 3

UE | evolved RAN | AGW | BMSC

MBMS session start

**402**

MBMS session start

**400**

Service Notification

Counting or Polling Response

**406**

**404**

Transmission mode selection SC PTM/SFN

Radio Bearer Configuration — **408**

Measurement Report — **410**

MIMO Adaptive Closed Loop Control — **412**

**Fig. 4**

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070155336 A1

- WO 2005062496 A1